# EUROPEAN PATENT APPLICATION

(11) **EP 1 857 246 A1**
(43) Date of publication of application: **21.11.2007**
(21) Application number: 07252060.4
(22) Date of filing: 18.05.2007
(51) Int. Cl.: B29C 33/38, B29C 33/40, B29C 45/16, B29D 11/00

(54) **Biomedical device mold**

(30) Priority: 18.05.2006 US 436484
(71) Applicant: Johson & Johnson Vision Care Inc., Jacksonville, FL 32256 (US)
(72) Inventor: Ansell, Scott F., Jacksonville Florida 32218 (US); Yin, Changhong, St. Augustine Florida 32292 (US)
(74) Representative: Fisher, Adrian John

(57) **Abstract**

The present invention includes molds for forming a biomedical device, such as an ophthalmic lens. The mold part (400) comprises a surface layer (401,402) comprising a first material and a second material and comprising a surface area used to form the biomedical device. The mold part (400) further comprises a core layer (403) comprising the first material and the second material wherein at any given cross section, the amount of the first material present in the surface layer is greater than the amount of the first material present in the core layer. The present invention also includes methods and systems for forming a mold part to process biomedical devices, such as ophthalmic lenses.

## Description

### FIELD OF THE INVENTION

This invention relates to molds for forming a biomedical device, such as an ophthalmic lens. More specifically, the present invention relates to apparatus and methods for fashioning biomedical devices with a mold that includes a surface layer and a core layer.

### BACKGROUND OF THE INVENTION

It is well known that contact lenses can be used to improve vision. Various contact lenses have been commercially produced for many years. Early designs of contact lenses were fashioned from hard materials. Although these lenses are still currently used in some applications, they are not suitable for all patients due to their poor comfort and relatively low permeability to oxygen. Later developments in the field gave rise to soft contact lenses, based upon hydrogels.

Hydrogel contact lenses are very popular today. These lenses are often more comfortable to wear than contact lenses made of hard materials. Malleable soft contact lenses can be manufactured by forming a lens in a multi-part mold where the combined parts form a topography consistent with the desired final lens.

Ophthalmic lenses are often made by cast molding, in which a monomer material is deposited in a cavity defined between optical surfaces of opposing mold parts. Multi-part molds used to fashion hydrogels into a useful article, such as an ophthalmic lens, can include for example, a first mold part with a convex portion that corresponds with a back curve of an ophthalmic lens and a second mold part with a concave portion that corresponds with a front curve of the ophthalmic lens. To prepare a lens using such mold parts, an uncured hydrogel lens formulation is placed between the concave and convex surfaces of the mold portions and subsequently cured. The hydrogel lens formulation may be cured, for example by exposure to either, or both, heat and light. The cured hydrogel forms a lens according to the dimensions of the mold portions.

Following cure, traditional practice dictates that the mold portions are separated and the lens remains adhered to one of the mold portions. A release process detaches the lens from the remaining mold part.

Further, new developments in the field have led to contact lenses made from hydrogels and silicone hydrogels that are coated with polymers to improve the comfort of the lenses. Often lenses are coated by treating the cured lenses with a polymer. Recently polymer coated lenses have been produced by coating the surfaces of a two part mold with a polymer, adding an uncured formulation to the coated lens mold, curing the lens, and subsequently releasing the cured lens from the mold where the surface of said cured lens is coated with the polymer that was originally adhered to the surface of the mold

It is known that some mold materials provide certain characteristics to a mold part which may be desirable, such as modulus qualities, while other mold materials may provide certain characteristics which are desirable for a mold surface, such as surface properties. Heretofore, a mold designer may have had to choose between different qualities in a single plastic injection molding environment or attempt to create a mold part through expensive, complicated and relatively slow co-injection molding processes.

Therefore, it would be advantageous to provide apparatus and methods which facilitate the use of a mold part with desirable characteristics from more than one mold material and to be able to create such a mold part using single unit injection molding processes.

### SUMMARY OF THE INVENTION

Accordingly, the present invention provides mold parts with multiple layers and apparatus, systems and methods for producing mold parts with multiple layers.

### DESCRIPTION OF THE DRAWINGS

FIG. 1 illustrates a diagram of an ophthalmic lens mold.
FIG. 2 illustrates a flow diagram with steps that may be used to implement some embodiments of the present invention.
FIG. 2A illustrates a flow diagram with additional steps that may be used to implement some embodiments of the present invention.
FIG. 3 illustrates processing stations that can be utilized in implementations of the present invention
FIG. 4 illustrates a diagram of an ophthalmic lens mold with multiple layers.
FIG. 5 illustrates a relationship of an amount of a first material comprising polypropylene and a second material.
FIGS. 6A-6B illustrate cross sections of an ophthalmic lens mold with a surface layer and a core layer.
FIG. 7 illustrates a top down view of an ophthalmic lens mold part comprising a first material and a second material.

### DETAILED DESCRIPTION OF THE INVENTION

This invention includes a mold part for making a lens that includes multiple layers of alicyclic co-polymer. The layers of the alicyclic co-polymer comprise, consist essentially of, or consist of at least two alicyclic polymers of different chemical structures wherein a first layer includes a first alicyclic co-polymer and forms a lens surface and a second layer includes a second alicyclic co-polymer and forms a core portion of the mold part.

According to the present invention, during an injection molding process, a differential in viscosity of a first material and a second material used to form a lens mold part can be used to create a multilayer lens part. In the context of this document, a surface layer and a core layer will be described, but it is understood that multiple layers may be formed according to the materials selected and the process conditions.

As used herein "lens" refers to any ophthalmic device that resides in or on the eye. These devices can provide optical correction or may be cosmetic. The term lens includes but is not limited to soft contact lenses, intraocular lenses, overlay lenses, ocular inserts, and optical inserts. The preferred lenses of the invention are soft contact lenses are made from silicone elastomers or hydrogels, which include but are not limited to silicone hydrogels, and fluorohydrogels.

As used herein, the term "alicyclic polymers" refers to compounds having at least one saturated carbocyclic ring therein. The saturated carbocyclic rings may be substituted with one or more members of the group consisting of hydrogen, C₁₋₁₀alkyl, halogen, hydroxyl, C₁₋₁₀alkoxycarbonyl, C₁₋₁₀alkoxy, cyano, amido, imido, silyl, and substituted C₁₋₁₀alkyl where the substituents are selected from one or more members of the group consisting of halogen, hydroxyl, C₁₋₁₀alkoxycarbonyl, C₁₋₁₀alkoxy, cyano, amido, imido, and silyl. Examples of alicyclic polymers include but are not limited to polymerizable cyclobutanes, cyclopentanes, cyclohexanes, cycloheptanes, cyclooctanes, biscyclobutanes, biscyclopentanes, biscyclohexanes, biscycloheptanes, biscyclooctanes, and norbornanes. It is preferred that the at least two alicyclic polymers be polymerized by ring opening metathesis followed by hydrogenation. Since co-polymers are costly, it is preferable that the molds made from these co-polymers may be used several times to prepare lenses instead of once which is typical. For the preferred molds of the invention, they may be used more than once to produce lenses.

More particularly, examples of alicyclic polymer containing saturated carbocyclic rings include but are not limited to the following structures 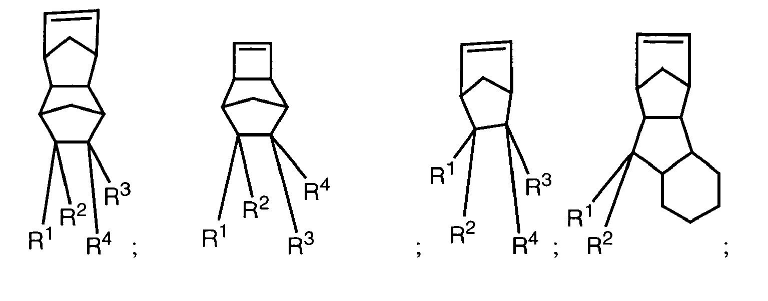 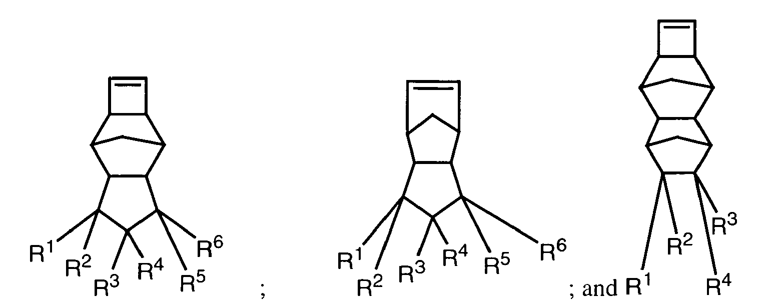 wherein R¹⁻⁶ are independently selected from one or more members of the group consisting of hydrogen, C₁₋₁₀alkyl, halogen, hydroxyl, C₁₋₁₀alkoxycarbonyl, C₁₋₁₀alkoxy, cyano, amido, imido, silyl, and substituted C₁₋₁₀alkyl where the substituents selected from one or more members of the group consisting of halogen, hydroxyl, C₁₋₁₀alkoxycarbonyl, C₁₋₁₀alkoxy, cyano, amido, imido and silyl. Further two or more of R¹⁻⁶ may be taken together to form an unsaturated bond, a carbocyclic ring, a carbocyclic ring containing one or more unsaturated bonds, or an aromatic ring. The preferred R¹⁻⁶ is selected from the group consisting of C₁₋₁₀alkyl and substituted C₁₋₁₀alkyl where the substituents are selected from the group consisting of halogen, hydroxyl, C₁₋₁₀alkoxycarbonyl, C₁₋₁₀alkoxy, cyano, amido, imido and silyl.

The alicyclic co-polymers consist of at least two different alicyclic polymer s. The preferred alicyclic co-polymers contain two or three different alicyclic polymer s, selected from the group consisting of

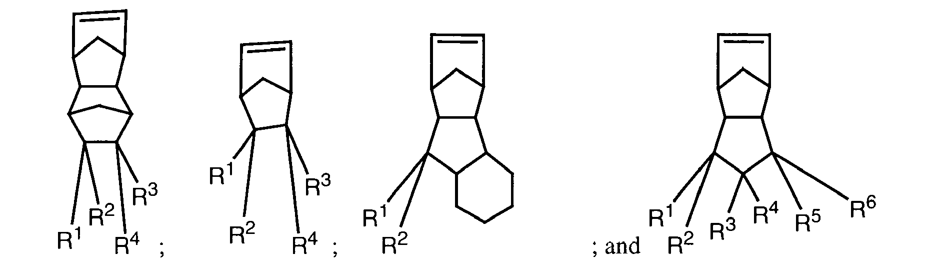

The particularly preferred alicyclic co-polymer contains two different alicyclic momoners where the generic structure of the saturated carbocyclic rings of the alicyclic polymers are of the formula 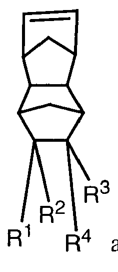 and R¹-R⁴ are C₁₋₁₀alkyl.

Typically the surface energy of the alicyclic co-polymer is between 30 and 45 dynes/cm at 25 °C. A preferred alicyclic co-polymer contains two different alicyclic polymers and is sold by Zeon Chemicals L.P. under the trade name ZEONOR. There are several different grades of ZEONOR. Various grades may have glass transition temperatures ranging from 105°C to 160°C. A specifically preferred material is ZEONOR 1060R, which according the to the manufacturer, ZEON Chemicals L.P. has an melt flow rate ("MFR") range of 11.0 grams/10 minutes to 18.0 grams/10 minutes (as tested JISK 6719 (230°C)), a specific gravity (H₂O =1) of 1.01 and a glass transition temperature of 105°C.

As used here, the term "mold" refers to a rigid or semi-rigid object that may be used to form lenses from uncured formulations. The preferred molds are two part molds as described above, where either the front curve or the back curve of the mold is made of the alicyclic co-polymers of the invention and the other curve is made of polyolefin. Examples of polyolefin include but are not limited to Zieglar-Natta catalyzed polypropylene that is nucleated and clarified, such as, but not limited to ExxonMobil PP9544 MED® and ATOFINA PP3620WZ®.

As used herein, "released from a mold," means that a lens is either completely separated from the mold, or is only loosely attached so that it can be removed with mild agitation or pushed off with a swab.

### Lenses

As used herein "lens" refers to any ophthalmic device that resides in or on the eye. These devices can provide optical correction or may be cosmetic. For example, the term lens can refer to a contact lens, intraocular lens, overlay lens, ocular insert, optical insert or other similar device through which vision is corrected or modified, or through which eye physiology is cosmetically enhanced (e.g. iris color) without impeding vision.

As used herein, the term "lens forming mixture" refers to a prepolymer material which can be cured, to form an ophthalmic lens. Various embodiments can include prepolymer mixtures with one or more additives such as: UV blockers, tints, photoinitiators or catalysts, and other additives one might desire in an ophthalmic lenses such as, contact or intraocular lenses. Lens forming mixtures are more fully described below.

### Molds

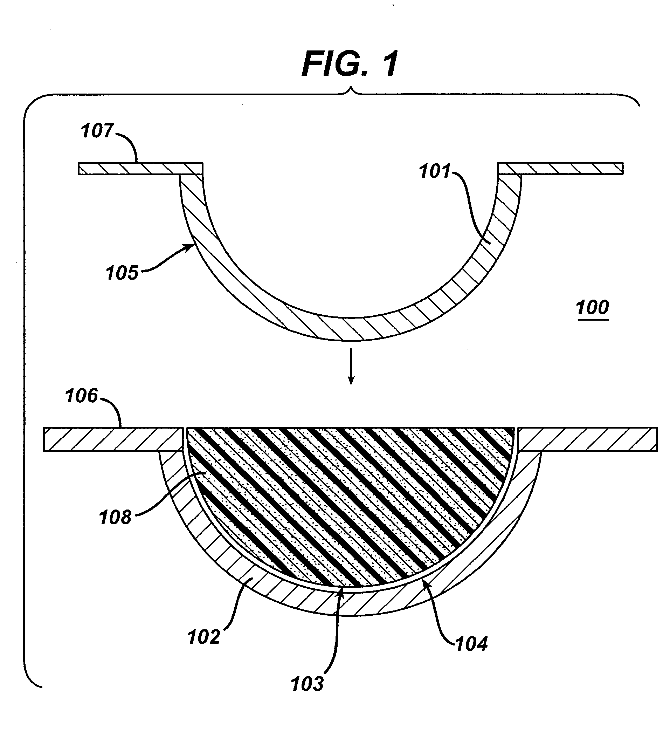

Referring now to Fig. 1, a diagram of an exemplary mold for an ophthalmic lens is illustrated. As used herein, the terms "mold" and "mold assembly" refer to a form 100 having a cavity 105 into which a lens forming mixture can be dispensed such that upon reaction or cure of the lens forming mixture (not illustrated), an ophthalmic lens of a desired shape is produced. The molds and mold assemblies 100 of this invention are made up of more than one "mold parts" or "mold pieces" 101-102. The mold parts 101-102 can be brought together such that a cavity 105 is formed by combination of the mold parts 101-102 and a lens 108 can be fashioned in the cavity 105. This combination of mold parts 101-102 is preferably temporary. Upon formation of the lens, the mold parts 101-102 can again be separated for removal of a fashioned lens (not shown.

A "mold part" as the term is used in this specification refers to a portion of mold 101-102, which when combined with another portion of a mold 101-102 forms a mold 100 (also referred to as a mold assembly 100). At least one mold part 101-102 is designed to have at least a portion of its surface 103-104 in contact with the lens forming mixture such that upon reaction or cure of the lens forming mixture that surface 103-104 provides a desired shape and form to the portion of the lens with which it is in contact. The same is true of at least one other mold part 101-102.

Thus, for example, in a preferred embodiment a mold assembly 100 is formed from two parts 101-102, a female concave piece (front curve mold part) 102 and a male convex piece (back curve mold part) 101 with a cavity formed between them. The portion of the concave surface 104 which makes contact with reaction mixture (not shown) has the curvature of the front curve of an ophthalmic lens to be produced in the mold assembly 100 and is sufficiently smooth and formed such that the surface of a ophthalmic lens formed by polymerization of the reaction mixture which is in contact with the concave surface 104 is optically acceptable.

The back curve mold part 101 has a convex surface 103 in contact which contacts the lens forming mixture and has the curvature of the back curve of a ophthalmic lens to be produced in the mold assembly 100. The convex surface 103 is sufficiently smooth and formed such that the surface of a ophthalmic lens formed by reaction or cure of the lens forming mixture in contact with the back surface 103 is optically acceptable. Accordingly, the inner concave surface 104 of the front curve mold part 102 defines the outer surface of the ophthalmic lens, while the outer convex surface 103 of the back mold piece 101 defines the inner surface of the ophthalmic lens. In some embodiments, the back curve mold part 101 can also include one or more concentric ring shaped ridges 107 which form an excess lens material ring puller 107 by engaging excess prepolymer which is cured and binds to the ridges so that it may be removed when the mold parts 101-102 separate.

Typically lenses are formed on at least one surface of both mold parts. However, in some embodiments, one surface of the lenses may be formed from a mold and the other surface could be formed using a lathing method, or other methods.

Aside from the alicyclic co-polymers, in some embodiments, the molds of the invention may contain additives that facilitate the separation of the lens forming surfaces, reduce the adhesion of the cured lens to the molding surface, or both. For example, additives such as metal or ammonium salts of stearic acid, amide waxes, polyethylene or polypropylene waxes, organic phosphate esters, glycerol esters or alcohol esters may be added to alicyclic co-polymers prior to curing said polymers to form a mold. Examples of such additives can include, but are not limited to: Dow Siloxane MB50-321 and Dow Siloxane MB50-321 (a silicone dispersion), Nurcrel 535 & 932 (ethylene-methacrylic acid co-polymer resin Registry No. 25053-53-6), Erucamide (fatty acid amide Registry No. 112-84-5), Oleamide (fatty acid amide Registry No. 301-02-0), Mica (Registry No. 12001-26-2), Atmer 163 (fatty alkyl diethanolamine Registry No. 107043-84-5), Pluronic (polyoxypropylene-polyoxyethylene block co-polymer Registry No.106392-12-5), Tetronic (alkyoxylated amine 110617-70-4), Flura (Registry No.7681-49-4), calcium stearate, zinc stearate, Super-Floss anti block (slip/anti blocking agent, Registry No. 61790-53-2), Zeospheres anti-block (slip/anti blocking agent); Ampacet 40604 (fatty acid amide), Kemamide (fatty acid amide), Licowax fatty acid amide, Hypermer B246SF, XNAP, polyethylene glycol monolaurate (anti-stat) epoxidized soy bean oil, talc (hydrated Magnsium silicate), calcium carbonate, behenic acid, pentaerythritol tetrastearate, succinic acid, epolene E43-Wax, methyl cellulose, cocamide (anti-blocking agent Registry No. 61789-19-3), poly vinyl pyrrolidinone (360,000 MW) and the additives disclosed in U.S. Pat No. 5,690,865 which is hereby incorporated by reference in its entirety. The preferred additives are polyvinyl pyrrolidinone, zinc stearate and glycerol mono stearate, where a weight percentage of additives based upon the total weight of the polymers is about 0.05 to about 10.0 weight percent, preferably about 0.05 to about 3.0, most preferably about 2.0 weight percent.

In some embodiments, in addition to additives, the separation of the lens from a lens forming surfaces may be facilitated by applying surfactants to the lens forming surfaces. Examples of suitable surfactants include Tween surfactants, particularly Tween 80 as described in U.S. Pat. No. 5,837,314 which is hereby incorporated by reference in its entirety and Span 80. Other examples of surfactants are disclosed in U.S. Pat. No. 5,264,161 which is hereby incorporated by reference in its entirety.

Still further, in addition to the alicyclic co-polymers, the molds of the invention may contain other polymers such as polypropylene, polyethylene, polystyrene, polymethyl methacrylate, and modified polyolefins containing an alicyclic moiety in the main chain. For example, a blend of the alicyclic co-polymers and polypropylene (Zieglar Natta or metallocene catalyst process with nucleation, where ATOFINA EOD 00-11) may be used, where the ratio by weight percentage of alicyclic co-polymer to polypropylene ranges from about 99:1, to about 20:80 respectively. This blend can be used on either or both mold halves, where it is preferred that this blend is used on the back curve and the front curve consists of the alicyclic co-polymers.

As used herein, the term "uncured" refers to the physical state of a reaction mixture (sometimes referred to as "lens formulation") prior to final curing to form a lens. Some lens formulations contain mixtures of monomers which are cured only once. Other lens formulations contain monomers, partially cured monomers, macromers and other components.

As used herein "lens forming surface" means a surface 103-104 that is used to mold a lens. In some embodiments, any such surface 103-104 can have an optical quality surface finish, which indicates that it is sufficiently smooth and formed so that a lens surface fashioned by the polymerization of a lens forming material in contact with the molding surface is optically acceptable. Further, in some embodiments, the lens forming surface 103-104 can have a geometry that is necessary to impart to the lens surface the desired optical characteristics, including without limitation, spherical, aspherical and cylinder power, wave front aberration correction, corneal topography correction and the like as well as any combinations thereof.

Front curve mold parts 102 and back curve mold parts 102 can be important to reduction, or even elimination of contact lens defects such as edge chips, tears, holes, delamination pulls, optical distortion, surface marks and other physical aberrations which result from manufacturing process, such as demold. Each particular plastic resin can provide particular advantages and disadvantages. For example, a polypropylene mold part may provide improved surface qualities, and yet have relatively less desirable dimensional stability. Cost of some materials may also be a factor in various applications.

According to the present invention, a multilayer mold is provided that provides core stability from a first alicyclic co-polymer (hereinafter "core layer") and a surface quality from a second polyolefin co-polymer (hereinafter "surface layer").

### Method Steps

Further this invention includes a method of making an ophthalmic lens with steps that include dispensing an uncured lens reaction mixture into a mold comprising, consisting essentially of, or consisting of, an alicyclic co-polymer wherein said alicyclic co-polymer includes a first alicyclic polymer and a second alicyclic polymer, each of different viscosity. IN some embodiment, the first material and the second material can also each be of different chemical structures. The combined materials form a surface layer and a core layer, such that the core layer includes the first material and the second material and is essentially covered by the first layer. In addition, at any given cross section, the amount of the first material present in the surface layer is greater than the amount of the first material present in the core layer. The terms lenses, alicyclic polymer s, and molds have their aforementioned meaning and preferred ranges.

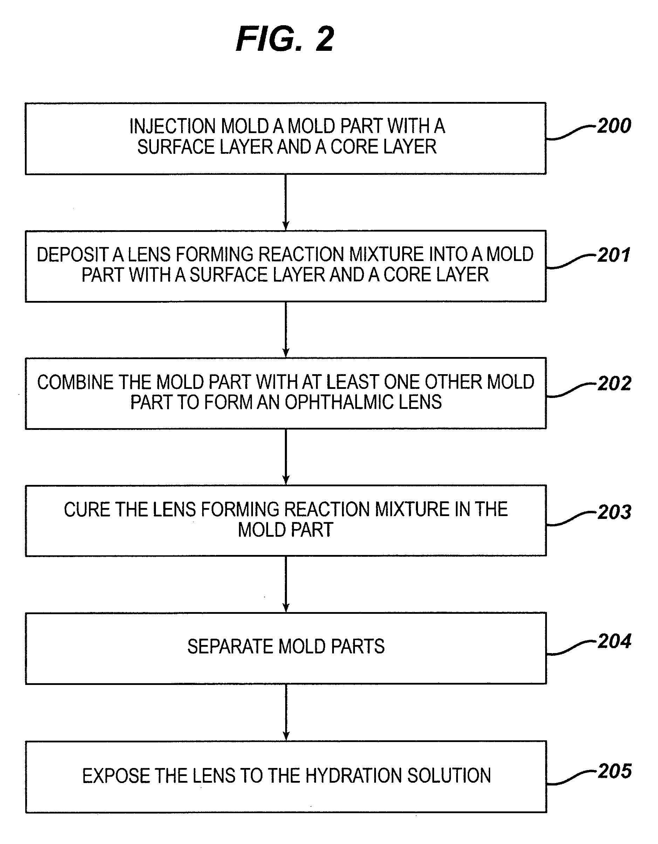

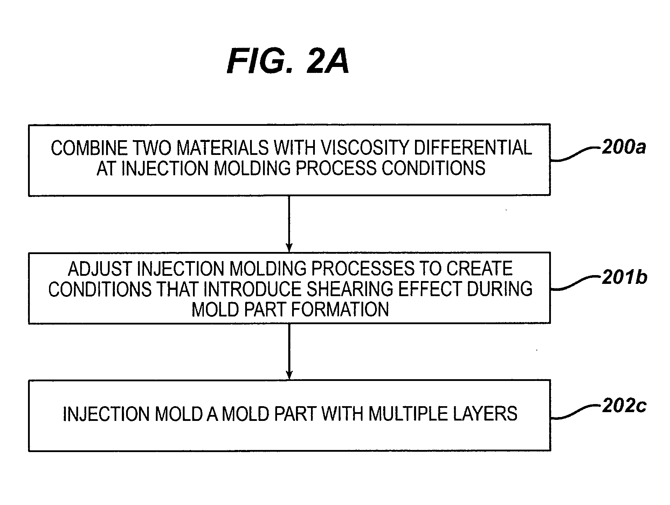

Referring now to Fig. 2, a flow diagram illustrates exemplary steps that may be implemented in some embodiments of the present invention. It is to be understood that some or all of the following steps may be implemented in various embodiments of the present invention.

At 200, injection molding processes are used to form a multilayer mold part including a surface layer and a core layer.

Referring to Fig. 2A, at 200a the multilayer mold part can be formed by combining at least two materials with a viscosity differential at the injection molding process conditions used to form the mold part. The two materials can be miscible or miscible at a microscopic level. At 200b, injection molding conditions that can be varied to facilitate the viscosity differential can include, for example: the temperature of the injected materials; the speed of injection of the materials; the pressure under which the materials are injected; the geometry of a hotrunner used in the injection molding process, the size of a gate used in the injection molding process, and other injection molding variables. At 200c, the mold part can be injection molded.

Referring now again to Fig. 2, At 201, the Reaction Mixture (described in more detail below) is deposited into a first mold part 102, which is utilized to shape the ophthalmic lens 100. The first mold part includes a surface layer of a first material and a second material and comprising a surface area used to form the biomedical device. The first mold part also includes a core layer also formed from the first material and the second material and essentially covered by the first layer. According to the present invention, at any given cross section, the amount of the first material present in the surface layer is greater than the amount of the first material present in the core layer.

At 202, the first mold part 102 can be combined with at least one other mold part (the second mold part) 101 to shape the deposited silicone monomer or other Reaction Mixture.

At 203, the Reaction Mixture is cured and formed into a lens 100. Curing can be effected, for example, by various means known in the art, such as, exposure of the monomer to actinic radiation, exposure of the monomer to elevated heat (i.e. 40°C to 75°C), or exposure to both actinic radiation and elevated heat.

At 204, the first mold part 101 can be separated from the second mold part 102 in a demolding process. In some embodiments, the lens 100 will have adhered to the second mold part 102 (i.e. the front curve mold part) during the cure process and remain with the second mold part 102 after separation until the lens 100 has been released from the front curve mold part 102. In other embodiments, the lens 100 can adhere to the first mold part 101.

At 205, in some embodiments of the present invention, the lens is exposed to a hydration solution. The hydration solution can include, for example, deionized (DI) water. In addition, some embodiments can include an aqueous solution with one or more additives, such PEG; PEO; Tween 80, which is polyoxyethylene sorbitan monooleate; Tyloxapol; octylphenoxy (oxyethylene) ethanol; amphoteric 10); preservatives (e.g. EDTA, sorbic acid, DYMED, chlorhexadine gluconate; hydrogen peroxide; thimerosal; polyquad; polyhexamethylene biguanide; antibacterial agents; lubricants; salts and buffers. In some embodiments, additives can be added to the hydration solution in amounts varying between 0.01% and 10% by weight, but cumulatively less than about 10% by weight.

The temperatures of the hydration solution can be anywhere from near freezing to near boiling; however, it is preferred that the temperatures between 30° C and 95° C, and even more preferably between 45° C and 75° C.

Exposure of the ophthalmic lens 100 to the hydration solution can be accomplished by washing, spraying, soaking, submerging, or any combination of the aforementioned. For example, in some embodiments, the lens 100 can be washed with a hydration solution of deionized water and PEG 2000 in a hydration tower.

To hydrate the lenses by washing in a hydration tower, front curve mold parts 102 containing lenses 100 can be placed in pallets or trays and stacked vertically. The solution can be introduced at the top of the stack of lenses 100 so that the solution will flow downwardly over the lenses 100. The solution can also be introduced at various positions along the tower. In some embodiments, the trays can be moved upwardly allowing the lenses 100 to be exposed to increasingly fresher solution.

In other embodiments, the ophthalmic lenses 100 can cycle through exposure to a hydration solution, such as DI water which is dosed into the mold part 102 and the retention area 106 during the hydration step 205. At 206, some embodiments can also include rinsing the lens of residual hydration

According to some embodiments of the present invention that expose the lenses to the hydration solution via submersion, magazines can be accumulated and then lowered into tanks containing the hydration solution. In addition, in some embodiments, the hydration solution can be heated to a temperature of between about 30°C and 72°C.

### Apparatus

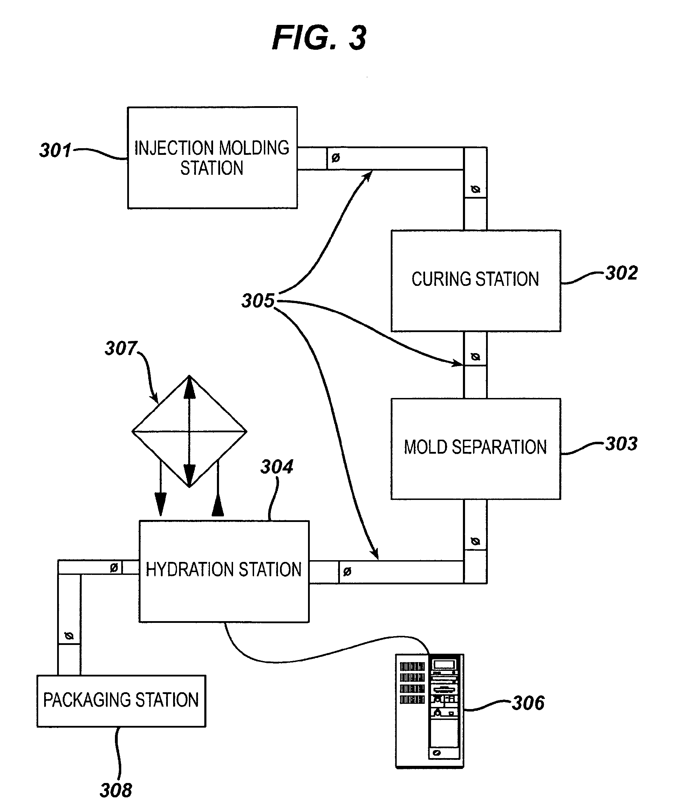

Referring now to Fig. 3, a block diagram is illustrated of apparatus contained in processing stations 301-304 that can be utilized in implementations of the present invention. In some preferred embodiments, processing stations 301-304 can be accessible to ophthalmic lenses 100 via a transport mechanism 305. The transport mechanism 305 can include for example one or more of: a robot, a conveyor and a rail system in conjunction with a locomotion means that may include, a conveyor belt, chain, cable or hydraulic mechanism powered by a variable speed motor or other known drive mechanism (not shown).

Some embodiments can include back surface mold parts 101 placed in pallets (not shown). The pallets can be moved by the transport mechanism 305 between two or more processing stations 301-304. A computer or other controller 306 can be operatively connected to the processing stations 301-304 to monitor and control processes at each station 301-304 and also monitor and control the transport mechanism 305 to coordinate the movement of lenses between the process stations 301-304.

Processing stations 301-304 can include, for example, an injection molding station 301. At the injection molding station 301, injection molding apparatus deposits a quantity of a Reaction Mixture, such as, for example, a silicone hydrogel as described above, into the front curve mold portion 102 and preferably completely covers the mold surface 104 with the Reaction Mixture. The Reaction Mixture should comprise any material or mixture of materials, which upon polymerization yields an optically clear, integral shape-sustaining contact lens or contact lens precursor.

As utilized in this application, a "precursor" means an object which has the desired relative dimensions and which upon subsequent hydration in water or buffered isotonic saline aqueous solution can be worn as a contact lens. Examples of such compositions abound in this field and are readily ascertainable by reference to standard literature sources.

In some embodiments, polymerization of Reaction Mixture can be carried out in an atmosphere with controlled exposure to oxygen, including, in some embodiments, an oxygen-free environment, because oxygen can enter into side reactions which may affect a desired optical quality, as well as the clarity of the polymerized lens. In some embodiments, the lens mold halves are also prepared in an atmosphere that has limited oxygen or is oxygen-free. Methods and apparatus for controlling exposure to oxygen are well known in the art.

A curing station 302 can include apparatus for polymerizing the Reaction Mixture. Polymerization is preferably carried out by exposing the Reaction Mixture to a source of initiation which can include for example, one or more of: actinic radiation and heat. Curing station 302 therefore includes apparatus that provide a source of initiation of the Reaction Mixture deposited into the front curve mold 102. In some embodiments, actinic radiation can be sourced from bulbs under which the mold assemblies travel. The bulbs can provide an intensity of actinic radiation in a given plane parallel to the axis of the bulb that is sufficient to initiate polymerization.

In some embodiments, a curing station 302 heat source can be effective to raise the temperature of the Reactive Mixture to a temperature sufficient to assist the propagation of the polymerization and to counteract the tendency of the Reaction Mixture to shrink during the period that it is exposed to the actinic radiation and thereby promote improved polymerization. Some embodiments can therefore include a heat source that can maintain the temperature of the Reaction Mixture (by which is meant that resin before it begins to polymerize, and as it is polymerizing) above the glass transition temperature of the polymerized product or above its softening temperature as it is polymerizing. Such temperature can vary with the identity and amount of the components in the Reaction Mixture. In general, some embodiments include apparatus capable of establishing and maintaining temperatures on the order of 40° C degree to 75° C.

In some embodiments, a source of heat can include a duct, which blows warm gas, such as, for example, N₂ or air, across and around the mold assembly as it passes under the actinic radiation bulbs. The end of the duct can be fitted with a plurality of holes through which warm gas passes. Distributing the gas in this way helps achieve uniformity of temperature throughout the area under the housing. Uniform temperatures throughout the regions around the mold assemblies can facilitate more uniform polymerization.

A mold separation station 303 can include apparatus to separate the back curve mold part 101 from the front curve mold part 102. Separation can be accomplished for example with mechanical fingers and high speed robotic movement that pry the mold parts apart.

In some embodiments, a cured lens which includes a polymer/diluent mixture can be treated by exposure to a hydration solution at a hydration station 304 which removes the diluent and ultimately replaces the diluent with water, whereby a silicone hydrogel lens is formed having a final size and shape which are quite similar to the size and shape of the original molded polymer/diluent article.

In some embodiments, a heat exchanger 307 is used to maintain the temperature of the hydration solution at a temperature greater than typical ambient room temperature. For example, and without limitation, a heat exchanger can be used to raise the temperature of the hydration solution to about 30° C to about 72° C.

### Lens Materials

As used herein "lens" refers to any ophthalmic device that resides in or on the eye. These devices can provide optical correction or may be cosmetic. The term lens includes but is not limited to soft contact lenses, intraocular lenses, overlay lenses, ocular inserts, and optical inserts. In some embodiments, preferred lenses of the invention are soft contact lenses are made from silicone elastomers or hydrogels, which include but are not limited to silicone hydrogels, and fluorohydrogels. Soft contact lens formulations are disclosed in U.S. Patent No. 5,710,302, EP 406161, JP 2000016905, U.S. Pat. No. 5,998,498, U.S. Patent No. 6,087,415, U.S. Pat. No. 5,760,100, U.S. Pat. No.5,776, 999, U.S. Pat. No. 5,789,461, U.S. Pat. No. 5,849,811, and U.S. Pat. No. 5,965,631. Further polymers that may be used to form soft contact lenses are disclosed in the following U.S. Pat. Nos. 6,419,858; 6,308,314; and 6,416,690.

Other preferred embodiments of the resent invention can include lenses of etafilcon A, genfilcon A, lenefilcon A, polymacon, acquafilcon A, balafilcon A, lotrafilcon A, galyfilcon A, senofilcon A, silicone hydrogels, including for example, lenses described in U.S. Patent No. 6,087,415, U.S. Pat. No. 5,760,100, U.S. Pat. No.5,776,999, U.S. Pat. No. 5,789,461, U.S. Pat. No. 5,849,811, and U.S. Pat. No. 5,965,631. Other embodiments can include ophthalmic lenses made from prepolymers. These patents as well as all other patent disclosed in this application are hereby incorporated by reference in their entirety.

### Injection Molding

According to some embodiments of the present invention, a surface layer and core layer mold is injection molded with a single unit injection molding apparatus by blending or compounding plastic resins with different viscosities under conditions present during injection molding conditions used to form the mold part. The blending or compounding methods can include, for example: simple hand/machine blending; single screw compounding, twin screw compounding; or multiple screw compounding. Other embodiments can include apparatus that utilizes two or more injection molding units to inject two or more materials into the mold cavity.

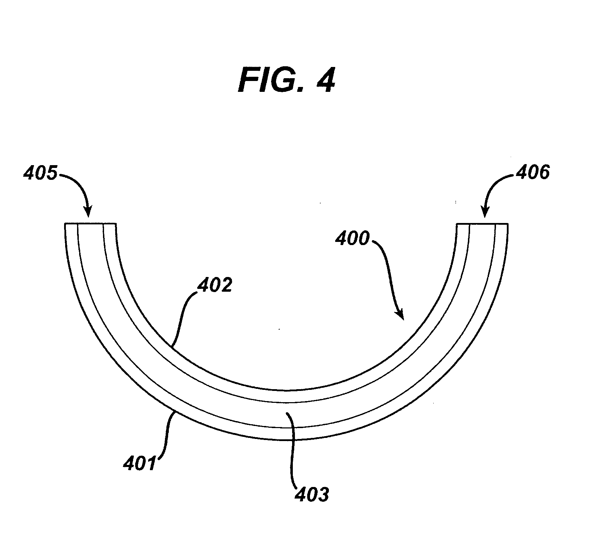

Referring now to Fig. 4, a mold part 400 is injected molded from a compound resin that includes at least a first material and a second material, and as described above, each material can include one or more of a polyolefin and an alicyclic co-polymer. Injection molding of the mold part 400 can be accomplished by introducing melted compound resin into a mold cavity designed to fashion the mold part 400 at a proximate end 405 and pushing the melted compound resin through the mold cavity until it flows to a distal end 406 of the mold part 400.

As the melted compound resin is pushed through the mold cavity, a first material will separate out to the surface of the mold part 400 and a second material will separate out to the core of the mold part 400.

In some embodiments, the material with a lower melt viscosity will tend to flow to the surface 401-402 of the mold part 400 and the higher melt viscosity material will tend to remain in the core 403 of the mold part 400. Generally, the separation will not be complete, however, at any given cross section the material with the higher melt flow rate will be at a higher concentration in a surface layer 401-402 as compared with the core layer 403. Similarly, the lower melt viscosity material will separate into the core layer 403 such that at any given cross section, the amount of the low melt viscosity material in the core layer 403 will be greater than the amount of the low melt flow material in the surface layer 401-402. In some embodiments, the first material and the second material can include two same type resins but the first material and the second material can have different melt viscosities at the conditions present in the injection molding process used to form the mold part 400.

Various embodiments can also include a first mold material with a lower surface energy that separates out into a surface layer 401-402 and a second material, with a relatively higher surface energy, which separates out into the core layer 403. Conversely, it is within the scope of this invention to include a first material with a higher surface energy than a second material. In another aspect, a first material can have a higher modulus or a lower modulus than a second material.

Specific examples of material that can be used to practice the present invention can include Zeonor 1060R® and polypropylene, such as ExxonMobil® PP1654 or PP9544; polystyrene and polypropylene, Zeonor 1060R® and polyvinyl alcohol; polystyrene and polyvinyl alcohol; and other combinations of different material or same type resins with differentials in melt viscosity.

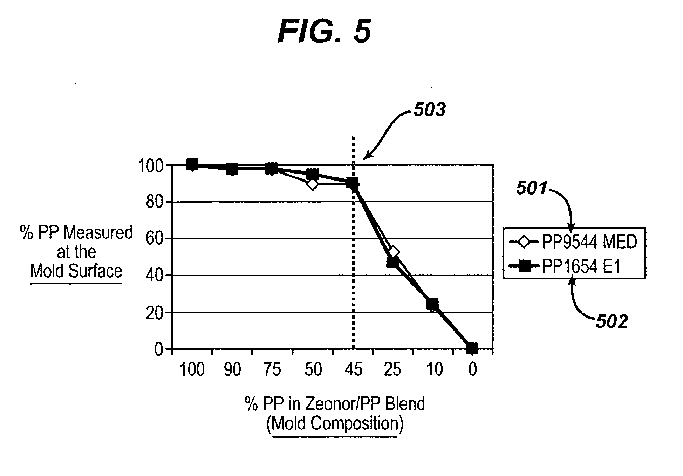

Referring now to Fig. 5, chart 500 illustrates a relationship of an amount of a first material comprising polypropylene and a second material to Zeonor 1060R® combined in a mold part and present in a surface layer formed on the mold part. Two different polypropylenes 501-502 are separately charted as the first material. As the chart indicates, a correlation exists between the amount of the first material present in the blend and whether the first material will form a surface layer. These particular materials indicate that a break point occurs at about 45% 502 of polypropylene which must be present in order to cause a majority of the polypropylene 501-502 to form a surface layer. It also indicates, that unlike coated mold parts, the surface layer can be made to include both blended materials, but the first material will mostly be present in the surface layer. Other first materials and second materials may have different ratios which define when a surface layer will form over a core layer.

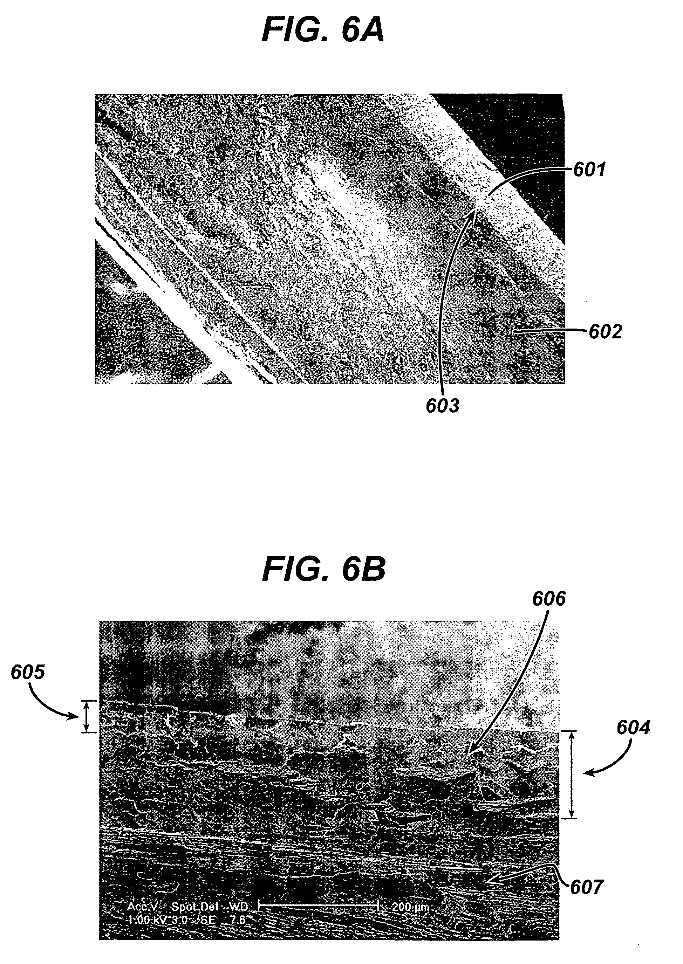

Referring now to Figs. 6A and 6B, two views of a cross section of a mold part according to the present invention are shown. Fig. 6A illustrates a cross section of a mold part as it would appear if viewed through a scanning electron microscope (hereinafter "SEM"). Fig. 6A illustrates a polypropylene surface layer 601, such as for example, ExxonMobile P9544 ® and a core layer 602, such as Zeonor 1060R®, in a blend of 55%w.t. core material to 45% surface material. Fig. 6A also illustrates a transition 603 from the surface layer 601 to the core layer 602.

It can also be noted that unexpectedly, the addition of an additive containing siloxane, such as Dow Corning MB50-001 (comprising essentially 50% polypropylene and 50% siloxane) in an amount of about 5% into a blend of the two alicyclic polymers will additionally result in a majority of the silicon separating into the surface layer 601. Therefore, it is within the scope of the present invention to include additives, such as siloxane containing materials in the combined materials used to form a mold part. For example in some preferred embodiments a material including up to about 10% siloxane can the mold material. Other additives are also within the scope of the invention.

Referring now to Fig. 6B, a cross section of a mold part is illustrated as it may be viewed through an SEM at a higher resolution than Fig. 6A. The high resolution cross section reveals the surface layer 606 and the core layer 607. The high resolution cross section also illustrates how the thickness of the surface layer 606 may vary, such as, for example, from the relatively thin surface layer of 605 to the relatively thicker surface layer of 604.

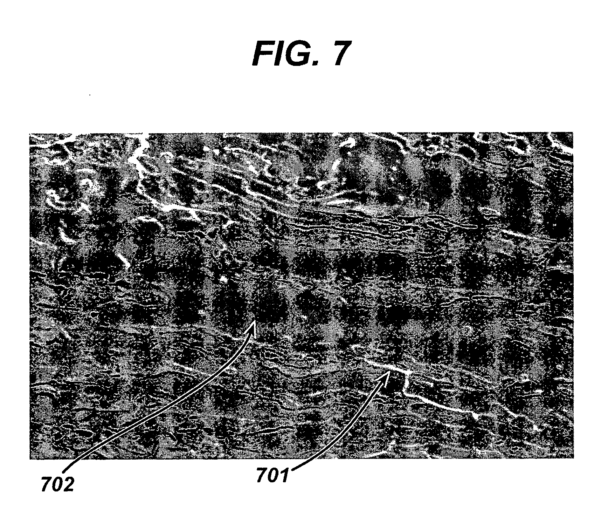

Referring now to Fig. 7, a cross section of some embodiments of the present invention which include a surface layer 606 as it may be viewed with an SEM at high resolution. The surface layer 700 includes a first material 701, such as, polypropylene and a second material 702, such as Zeonor 1060R®. The SEM illustration differentiates over coated mold parts in that the surface layer includes both the first and second material. In addition, other materials or additives may be included in one or more of: the surface layer and the core layer.

Accordingly, the present invention provides mold parts, as well as methods and apparatus for forming the mold parts. The mold parts include at least a first material and a second material. The inclusion of multiple materials allows for various desired qualities to be imparted into the mold. For example, a surface layer can include good wettability which can be beneficial to reduction of holes in lenses; a lower surface energy for easy lens demolding and reduction in edge chips and edge tear defects. Similarly a core can include a material with desired modulus characteristics and dimensional stability. Some embodiments can include a core material of a low cost material, such as, for example polystyrene. Still other embodiments can include a multilayer mold formed with two or more resin materials with different shrinkage or thermal expansion factors which can facilitate lens demold and lens release during hydration at selected temperatures.

While the present invention has been particularly described above and drawings, it will be understood by those skilled in the art that the foregoing ad other changes in form and details may be made therein without departing from the spirit and scope of the invention, which should be limited only by the scope of the appended claims.

## Claims

1. A mold part for forming a biomedical device, the mold part comprising;
a surface layer comprising a first material and a second material and comprising a surface area used to form the biomedical device ;
a core layer comprising the first material and the second material and essentially covered by the first layer, wherein, at any given cross section, the amount of the first material present in the surface layer is greater than the amount of the first material present in the core layer.

2. The mold part of claim 1 wherein the first material has a different melt viscosity than the second material when subject to the conditions of an injection molding process used to fashion the mold part.

3. The mold part of claim 2 wherein the first material has a lower viscosity than the second material when subject to the injection molding process used to fashion the mold part.

4. The mold part of claim 1 wherein the surface area has a proximate end and a distal end and the surface at the proximate end comprises about 98% or more of the first material and the distal end comprises more than about 70% of the first material.

5. The mold part of claim 1 wherein the first mold material comprises about 40% or more of the mold part.

6. The mold part of claim 1 wherein the first material and the second material comprise a polyolefin and the first material and the second material are not miscible on a molecular scale.

7. The mold part of claim 1 wherein the first material and the second material comprise a polyolefin and the first material and the second material are at least partially miscible on a molecular scale.

8. The mold part of claim 1 additionally comprising a third material comprising less than 10% or more of the mold part; wherein the third material comprises about 50% siloxane and wherein, at any given cross section, the amount of silicon present in the surface layer is greater than the amount of silicon present in the core layer.

9. The mold part of claim 1 wherein the first material comprises a lower surface energy than the second material.

10. The mold part of claim 1 wherein the first material comprises a higher surface energy than the second material.

11. The mold part of claim 1 wherein the first material comprises a higher modulus than the second material.

12. The mold part of claim 1 wherein the first material comprises a lower modulus than the second material.

13. The mold part of claim 1 wherein the first material and the second material comprise at least two alicyclic polymers of different chemical structures.

14. The mold part of claim 13 wherein the alicyclic polymers comprise polymerizable cyclobutanes, cyclopentanes, cyclohexanes, cycloheptanes, cycloctanes, biscyclobutanes, biscyclopentanes, biscyclohexanes, biscycloheptanes, biscyclooctanes, or norbornanes.

15. The mold part of claim 13 comprising two alicyclic polymers wherein the alicyclic polymers comprise a saturated carbocyclic ring.

16. The mold part of claim 13 wherein the alicyclic polymers are selected from the group consisting of 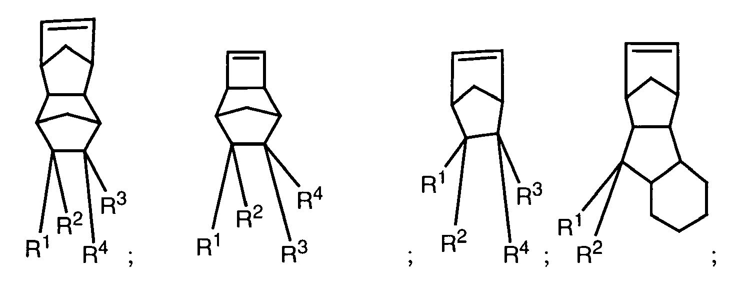 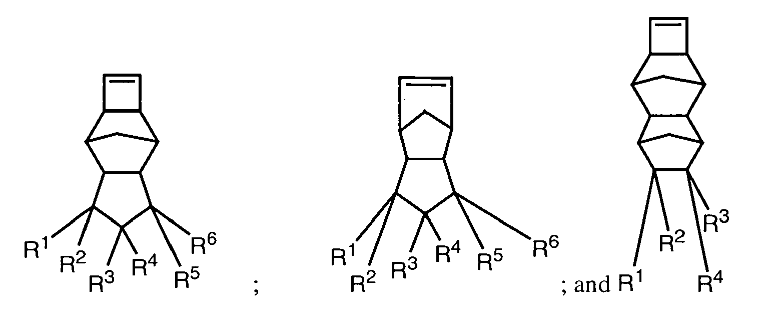 wherein R¹⁰⁻⁶ are independently selected from one or more members of the group consisting of hydrogen, C₁₀₋₁₀₀alkyl, halogen, hydroxyl, C₁₀₋₁₀₀alkoxycarbonyl, C₁₀₋₁₀₀alkoxy, cyano, amido, imido, silyl, and substituted C₁₀₋₁₀₀alkyl where the substituents are selected from the group consisting of halogen, hydroxyl, C₁₀₋₁₀₀alkoxycarbonyl, C₁₀₋₁₀₀alkoxy, cyano, amido, imido and silyl.

17. The mold part of claim 11 wherein the alicyclic polymers are selected from the group consisting of 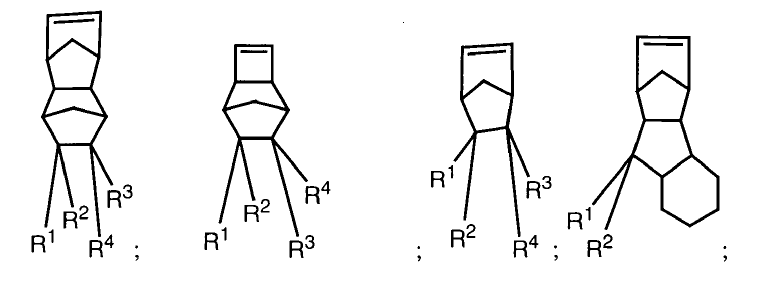 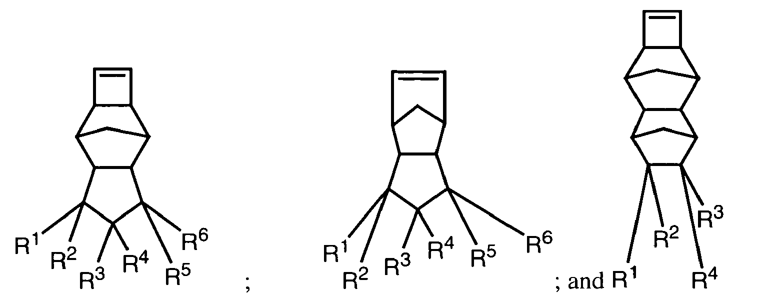 wherein two or more of R¹⁰⁻⁶ are taken together to form an unsaturated bond, a carbocyclic ring, a carbocyclic ring containing one or more unsaturated bonds, or an aromatic ring.

18. The mold part of claim 11 wherein the alicyclic polymers are selected from the group consisting of 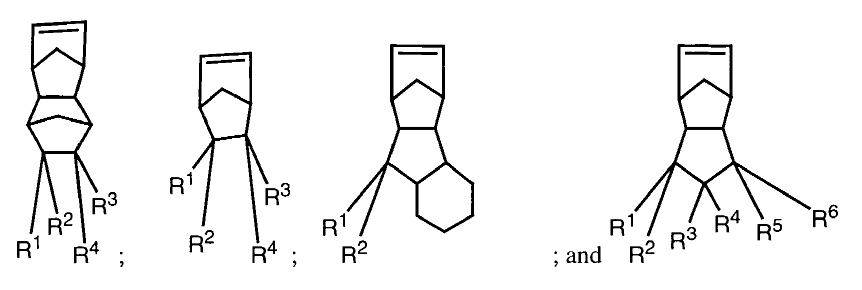 wherein R¹⁰⁻⁶ are independently selected from one or more members of the group consisting of hydrogen, C₁₀₋₁₀₀alkyl, halogen, hydroxyl, C₁₀₋₁₀₀alkoxycarbonyl, C₁₀₋₁₀₀alkoxy, cyano, amido, imido, silyl, and substituted C₁₀₋₁₀₀alkyl where the substituents are selected from one or more members of the group consisting of halogen, hydroxyl, C₁₀₋₁₀₀alkoxycarbonyl, C₁₀₋₁₀₀alkoxy, cyano, amido, imido and silyl.

19. The mold part of claim 11 where R¹⁰⁻⁶ C₁₀₋₁₀₀alkyl, or substituted C₁₀₋₁₀₀alkyl where the substituents are selected from the group consisting of halogen, hydroxyl, C₁₀₋₁₀₀alkoxycarbonyl, C₁₀₋₁₀₀alkoxy, cyano, amido, imido and silyl.

20. The mold part of claim 11 wherein the alicyclic polymers are 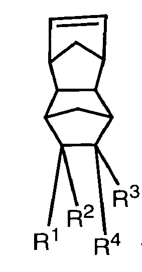 wherein R¹⁰⁻⁴ is independently selected from C¹⁰⁻¹⁰⁰alkyl.

21. The mold part of claim 10 wherein the mold further comprises an additive.

22. The mold part of claim 10 wherein the additive is about 2.0 weight percent zinc stearate.

23. The mold part of claim 10 wherein at least one of the first mold material and the second mold material comprises polyvinyl alcohol.

24. The mold part of claim 23 wherein the polyvinyl alcohol is water soluble.

25. A method of forming a mold part for forming a biomedical device, the method comprising the steps of:
mixing a combined mold material comprising first material and a second material, wherein the first material and the second material are not miscible on a molecular scale;
injection molding the combined mold material through a single injection unit, wherein the mold part comprises a first end proximate to the injection unit and a second end distal to the injection unit; and
forming a functional layer on the surface of the mold part and a core layer beneath the functional layer; wherein at any given cross section, the amount of said first material in the functional layer is greater than the amount of said first material in the core layer.

26. The method of claim 25 wherein the core layer comprises at least about 4% of the first material.

27. A method of forming an ophthalmic lens, the method comprising the steps of:
mixing a combined mold material comprising a first material and a second material, wherein the first material and the second material comprise a viscosity differential at the conditions present during injection molding of a first mold part;
injection molding the combined mold material to form the first mold part wherein the first mold part comprises a first end proximate to the injection unit and a second end distal to the injection unit; and
forming a functional layer on the surface of the first mold part and a core layer beneath the functional layer; wherein at any given cross section, the amount of said first material in the functional layer is greater than the amount of said first material in the core layer;
injection molding a second mold part;
dosing an amount of a reaction mixture into a receiving area of one of the mold parts, wherein each mold part comprises a lens forming surface;
coupling the mold parts together to form the reaction mixture into a desired shape of the ophthalmic lens within a cavity formed between the first mold part and the second mold part; and
curing the reaction mixture to fashion the ophthalmic lens.

28. The method of claim 27 wherein at least one of the first mold part and the second mold part comprises an area capable of transmitting sufficient light energy to cure the reaction mixture.

29. The method of claim 27 wherein the injection molding is performed via a single injection unit.

30. The method of claim 27 wherein the first material and second material are combined with apparatus comprising at least two injection molding units used to injection mold the first mold part.
